# EUROPEAN PATENT APPLICATION

(11) **EP 4 663 269 A1**
(43) Date of publication of application: **17.12.2025**
(21) Application number: 24181382.3
(22) Date of filing: 11.06.2024
(51) Int. Cl.: B01D 53/02, B01D 53/22, B01D 53/26, B01D 69/00, B01D 53/28, B01D 71/00, B01D 53/04

(54) **PROCESS AND SYSTEM FOR THE CAPTURE OF CARBON DIOXIDE DIRECTLY FROM AIR**

(71) Applicant: Nederlandse Organisatie voor toegepast-natuurwetenschappelijk Onderzoek TNO, 2595 DA 's-Gravenhage (NL)
(72) Inventor: The designation of the inventor has not yet been filed
(74) Representative: Nederlandsch Octrooibureau

(57) **Abstract**

The inventors developed a process for the direct air capture of carbon dioxide wherein the problem of water co-adsorption is avoided. The process according to the invention comprises:
(a) contacting air with a membrane that is selectively permeable for water, to obtain a retentate stream of air depleted in water and a membrane loaded with water;
(b) subjecting the retentate stream of step (a) to a sorbent for direct air capture, to obtain a stream of air depleted in water and carbon dioxide and a sorbent loaded with carbon dioxide;
(c) regenerating the loaded sorbent of step (b), to obtain purified carbon dioxide stream and a regenerated sorbent;
(d) regenerating the loaded membrane of step (a) by contacting the membrane with a sweep gas at reduced pressure, wherein the sweep gas comprises at least part of the stream of air depleted in water and carbon dioxide obtained in step (b) and/or at least part of the purified carbon dioxide stream obtained in step (c).

The process according to the invention is economically feasible, energy efficient and affords clean air, depleted in carbon dioxide, and a purified carbon dioxide stream. The invention further concerns a system for direct air capture.

## Description

### Field of the invention

The present invention relates to a system and a process for the capture of carbon dioxide directly from air.

### Background art

Direct Air Capture (DAC) is a technology wherein carbon dioxide is directly removed from ambient air. This is challenging as the carbon dioxide content in air is very low, typically about 0.04% (400 ppm). Conventional methods available for capturing carbon dioxide from air typically make use of a liquid solvent, usually an amine based solvent, to absorb carbon dioxide from air. Also, sorbent-based direct air capture processes have been developed, which employ a sorbent to capture carbon dioxide from air. Sorbent-based direct air capture processes suffer from the imperfect selectivity of carbon dioxide sorbents. These sorbents will not only bind carbon dioxide but also water. This water co-adsorption is detrimental for the energy efficiency of the process, as removing water molecules form the sorbent during regeneration requires substantial amounts of energy.

Known solutions to the problem of water co-adsorption focus on the reduction of water co-adsorption by implementation of an alternative sorbent regeneration step or by increasing carbon dioxide selectivity of the sorbent. An alternative way to reduce this problem is to utilize the energy stored in the water vapor that is being desorbed during regeneration, through vapor recompression, as such compensating part of the energy used for the water's heat of desorption. Drechsler (Energy 192 (2020) 116587) reviewed the current state of the art on water co-adsorption during direct air capture of carbon dioxide.

US 2022/305434 describes a process wherein a stream of exhaust air is fed into a direct air carbon capture unit. The capture device may contain a liquid solvent or solid sorbent or other carbon dioxide absorber. The DAC unit may optionally include a water separation device. US 2022/305434 is silent on what water separation devices would be suitable, and on how to regenerate this device.

The present invention provides in the need for an energy-efficient and economically feasible process for direct air capture of carbon dioxide.

### Summary of the invention

The inventors developed a process and system for the direct air capture of carbon dioxide wherein the problem of water co-adsorption is avoided. The process and system according to the invention is economically feasible, energy efficient and affords clean air, depleted in carbon dioxide, and a purified carbon dioxide stream. The clean air is readily emitted into the atmosphere, while the purified carbon dioxide stream can be used for carbon sequestration or as source of carbon dioxide in the formation of valuable compounds. The economics and energy expenditure of the process according to the invention is improved over conventional direct air capture processes, by virtue of a selective water removal step upstream of the direct air capture. The energy costs of the selective water removal step is kept low by using a (small amount of) sweep gas originating from the direct air capture step. Moreover, by reducing the amount of water molecules being sorbed in the direct air capture step, and thus being desorbed during regeneration of the sorbent, the energy expenditure of desorption is significantly lowered.

### Detailed description

At present, sorbent-based direct air capture of carbon dioxide is not an economical process. Water molecules, which are abundantly present in air, compete with carbon dioxide molecules for the adsorption sites of the sorbent, which reduces the efficiency of the carbon dioxide sorption and increases costs for regeneration of the sorbent. The inventors developed a process and system for the direct air capture of carbon dioxide wherein the problem of water co-adsorption is avoided. The process and system according to the invention is economically feasible, energy efficient and affords clean air, depleted in carbon dioxide, and a purified carbon dioxide stream. The clean air is readily emitted into the atmosphere, while the purified carbon dioxide stream can be used for carbon sequestration or as source of carbon dioxide in the formation of valuable compounds.

In a first aspect, the invention concerns a process for the direct air capture of carbon dioxide. The process according to the invention is typically performed in the system according to the invention. The process according to the invention comprises the following steps:
(a) contacting air with a membrane that is selectively permeable for water, to obtain a retentate stream of air depleted in water and a membrane loaded with water;
(b) subjecting the retentate stream of step (a) to a sorbent for direct air capture, to obtain a stream of air depleted in water and carbon dioxide and a sorbent loaded with carbon dioxide;
(c) regenerating the loaded sorbent of step (b), to obtain purified carbon dioxide stream and a regenerated sorbent;
(d) regenerating the loaded membrane of step (a) by contacting the membrane with a sweep gas at reduced pressure, wherein the sweep gas comprises at least part of the stream of air depleted in water and carbon dioxide obtained in step (b) and/or at least part of the purified carbon dioxide stream obtained in step (c).

In a second aspect, the invention concerns a system for the direct air capture of carbon dioxide. The system according to the invention is intended for operating the process according to the invention. The system according to the invention comprises the following elements:
(a) an air inlet in fluid connectivity with membrane section (b);
(b) a membrane section comprising a membrane (b1) that is selectively permeable for water, having a retentate side (b2) for receiving air from the inlet (a) and comprising an outlet (b3) for discharging air depleted in water, which is in fluid connectivity with sorbent section (c), and a permeate side (b4) comprising an inlet (b5) for receiving a sweep gas via a fluid connection (d1) or (d2) and an outlet (b6) for discharging a loaded sweep gas;
(c) a sorbent section comprising a carbon dioxide sorbent (c1) that is configured to receive air depleted in water from the retentate side of the membrane (b), an outlet (c2) for discharging air depleted in water and carbon dioxide, means (c3) for regenerating the sorbent and an outlet (c4) for discharging a purified carbon dioxide stream from the sorbent;
(d) means for regenerating the membrane, comprising a fluid connection (d1) between outlet (c2) and inlet (b5) and/or a fluid connection (d2) between outlet (c4) and inlet (b5).

Operating a membrane is typically expensive in terms of costs and energy, as it requires a pressure difference across the membrane. Although an increased pressure at the retentate side of the membrane is possible, establishing a reduced pressure, e.g. a vacuum, at the permeate side is commonly employed. The costs of establishing this pressure difference make the use of membrane not the logical choice to increase the efficiency of a direct air capture process. Nonetheless, the present inventors have been able to reduce the energy needed for operating the membrane by using a relatively small amount of sweep gas stream, which is taken from the process itself, such that a less deep vacuum is needed at the permeate. The sweep gas comprises at least part of the stream of air depleted in water and carbon dioxide obtained in step (b) and/or at least part of the purified carbon dioxide stream obtained in step (c). Secondly, the energy expenditure of step (a) is compensated by requiring less energy for regeneration of the sorbent in step (c), in view of the lower amount of water sorbed during step (b). Lastly, also the CAPEX of the process according to the invention could be lowered, as less expensive sorbent can be used, since selectivity for carbon dioxide over water is not crucial.

A further aspect, the invention thus concerns the use of a purified carbon dioxide stream and/or a stream of air depleted in water and carbon dioxide for the regeneration of a selective water membrane loaded with water, wherein the regeneration occurs at reduced pressure and the stream comprised in the sweep gas originates from a process for the direct air capture of carbon dioxide, and wherein the membrane is used for the removal of water from air during the same process for the direct air capture of carbon dioxide.

The present invention involves a process, a system and a use. As the skilled person will appreciate, anything defined for the process according to the invention equally applies to the system and the use according to the invention. Likewise, anything defined for the system according to the invention equally applies to the process and the use according to the invention. Likewise, anything defined for the use according to the invention equally applies to the process and the system according to the invention.

### The process

The process according to the invention is for the direct air capture of carbon dioxide and comprises the following steps:
(a) contacting air with a membrane that is selectively permeable for water, to obtain a retentate stream of air depleted in water and a membrane loaded with water;
(b) subjecting the retentate stream of step (a) to a sorbent for direct air capture, to obtain a stream of air depleted in water and carbon dioxide and a sorbent loaded with carbon dioxide;
(c) regenerating the loaded sorbent of step (b), to obtain purified carbon dioxide stream and a regenerated sorbent;
(d) regenerating the loaded membrane of step (a) by contacting the membrane with a sweep gas at reduced pressure, wherein the sweep gas comprises at least part of the stream of air depleted in water and carbon dioxide obtained in step (b) and/or at least part of the purified carbon dioxide stream obtained in step (c).

In one embodiment, the direct air capture of step (b) occurs directly downstream of the selective water removal of step (a), without further treatment of the retentate stream obtained in step (a). In one embodiment, the regeneration of step (c) occurs directly after the direct air capture of step (b), without further treatment of the loaded sorbent obtained in step (a). In one embodiment, the regeneration of step (d) occurs simultaneously with the selective water removal of step (a). In one embodiment, the regeneration of step (d) occurs directly downstream of the direct air capture of step (b), without further treatment of the stream of air depleted in water and carbon dioxide obtained in step (b), optionally except for splitting part of this stream from the main stream. In one embodiment, the regeneration of step (d) occurs directly downstream of the regeneration of step (c), without further treatment of the purified carbon dioxide stream obtained in step (c), optionally except for splitting part of this stream from the main stream.

In an especially preferred embodiment, the process according to the invention operates continuously, wherein the sorbent cycles between steps (b) and (c), preferably wherein at least two sorbent beds operate simultaneously with at least one operating step (b) and at least one operating step (c), and the membrane operates continuously wherein steps (a) and (d) occur simultaneously. When steps (a) and (d) operate simultaneously, water molecules are removed at the retentate side of the membrane in step (a) while at the same time a sweep gas is contacted with the permeate side of the membrane to remove water molecules from the membrane in step (d). Typically, the permeate side of the membrane is at lower pressure than the retentate side, to promote the migration of water molecules through the membrane.

The process according to the invention utilizes air as feedstock, and removes carbon dioxide therefrom. The process according to the invention affords air that is depleted in carbon dioxide, which is typically emitted into the atmosphere. As such, the present invention is beneficial in lowering the content greenhouse gases in the atmosphere and in the reduction of global warming. The present invention is able to cope with air having relatively large water content, such as up to 5 vol%. The allowable water content is not limited to any specific range, but can be anything that is encountered naturally. In one embodiment, the air that is subjected to step (a) comprises 0.1-5 vol% water, preferably 0.5 - 5 vol% water more preferably 1-3 vol% water. In terms of relative humidity (RH), the incoming air may be anything between 0 and 100 % RH, preferably in the range of 25 - 99 % RH, more preferably in the range of 40 - 95 % RH, most preferably in the range of 50 - 90 % RH. The concentration of carbon dioxide of the incoming air is common and relatively constant. The exact carbon dioxide content is not crucial for the present invention, and is typically in the range of 0.02 - 0.1 vol%, preferably in the range of 0.03 - 0.06 vol%. As such, it is preferred that the air is not subjected to any pre-treatment before being subjected to the process according to the invention, but is taken directly from the atmosphere.

In addition to the cleaned air, which is depleted in carbon dioxide and is typically emitted into the atmosphere, the process according to the invention affords a stream of carbon dioxide. This stream of carbon dioxide is obtained in step (c), and - for the embodiment that the sweep gas in step (d) comprises part of the purified carbon dioxide stream obtained in step (c) - in step (d). The obtained stream of carbon dioxide can be used as deemed fit. Typically, it is used for carbon sequestration or as source of carbon dioxide in the formation of valuable compounds. If needed, the carbon dioxide can be dried prior to further use, preferably to obtain a molar ratio of carbon dioxide to water of at least 1. Such drying is typically performed in case the sweep gas in step (d) comprises part of the purified carbon dioxide stream obtained in step (c). Drying of a carbon dioxide stream is known in the art, and may be performed by condensation of water.

### Step (a) - Selective water removal

In step (a), the incoming air is contacted with a membrane that is selectively permeable for water. This contacting of air with a membrane that is selectively permeable for water affords a retentate stream of air depleted in water and a membrane loaded with water. The retentate stream is then subjected to step (b), and the membrane loaded with water is regenerated in step (d).

The entering of air into the system may be facilitated by means for establishing a flow of air through the system. Such means may include a fan or a suction device. In one embodiment, reduced pressure is used to create a flow of air into the system, wherein the pressure within the system may be below ambient and/or the pressure upstream of the system may be above ambient. Preferably, a flow of air is created by employing reduced pressure within the system, in particular at the permeate side of the membrane. The flow rate of air into the system is not crucial for obtaining the benefits of the invention, and may be in the range of 0.01-100 m³/h, such as 0.2 - 10 m³/h. Air that is entered into the system is contacted with the water selective membrane and subjected to step (a).

Any membrane known in the art that is selectively permeable for water can be used in the present invention. It is further preferred that the membrane is not (or hardly) permeable for carbon dioxide. The selectivity of the membrane for water permeance over carbon dioxide permeance is preferably expressed as the ratio between the water permeability and the carbon dioxide permeability, with the selectivity being at least 1 × 10², preferably at least 1 × 10⁴. In a preferred embodiment, the membrane has a permeability for water in the range of 2 × 10⁴ - 2 × 10⁶ Barrer, more preferably in the range of 1 × 10⁵ - 1 × 10⁶ Barrer. Likewise, it is preferred that the permeability for carbon dioxide is at most 2 × 10² Barrer, preferably at most 1 × 10² Barrer. A low permeability for carbon dioxide ensures that the loaded sweep gas, that is obtained when the membrane is regenerated, contains hardly any CO₂, which is the case when the sweep gas comprises part of the stream of air depleted in water and carbon dioxide obtained in step (b). The loaded sweep gas can then be emitted into the atmosphere as cleaned air depleted in carbon dioxide. For this embodiment, as well as when the sweep gas comprises part of the purified carbon dioxide stream obtained in step (c), the use of a membrane with low permeability for carbon dioxide has as additional advantage that the energy used to transport molecules through the membrane is only used to remove water from the incoming air. The pressure difference established over the membrane forces water molecules to cross the membrane, and not carbon dioxide molecules. As carbon dioxide molecules are removed in step (b), the overall energy efficiency of the process is increased when a membrane with a low permeability for carbon dioxide is used. As step (a) is typically the most energy consuming of the process according to the invention, in view of the required pressure difference over the membrane, energy that is used to transport carbon dioxide molecules over the membrane is wasted. Removal of carbon dioxide in step (b) is much more energy efficient.

Suitable membranes include sulfonated poly(ether ether ketone) (SPEEK) membranes, sulfonated tetrafluoroethylene based fluoropolymer-copolymer membranes, polyimide (PI) membranes, polydimethylsiloxane (PDMS) membranes, organosilica membranes (e.g. bis(triethoxysilyl)ethane (BTESE) organosilica membranes or PEG-(3-aminopropyl)triethoxysilane (APTES) (PA) membranes), polybenzimidazole (PBI) membranes, zeolite membranes and carbon-based membranes. Especially good results have been obtained with sulfonated poly(ether ether ketone) membranes and sulfonated tetrafluoroethylene based fluoropolymer-copolymer membranes. Most preferably, a sulfonated poly(ether ether ketone) membrane is used.

The skilled person will appreciate that a certain minimum surface area of the membrane is beneficial for effective water removal during step (a). The exact surface area is not crucial to the invention, and typically depends on the inlet flow of the incoming air, and can be optimized depending on the transmembrane pressure difference and volume of the sweep gas. For example, the surface area may be in the range of 1 cm² - 10 m² per 1 m³/h of incoming air, preferably in the range of 10 cm² -0.1 m² per 1 m³/h of incoming air. The skilled person is able to operate a membrane for selective water removal. Typical operating conditions include operating the retentate side of the membrane around ambient pressure or slightly above or below, such as between 0.5 and 2.0 bar(a), preferably in the range of about 0.8 - 1.5 bar(a). The pressure difference across the membrane is typically in the range 0.01 - 1.5 bar(a), preferably in the range of 0.1 - 1.1 bar(a), more preferably in the range of 0.5 - 1.0 bar(a). As the pressure difference typically drops across the length of the membrane, these pressure differences are established at the beginning (air inlet end) of the membrane, and is typically lower at the end of the membrane. No changes in temperature are needed to operate step (a), which therefore preferably operates at ambient temperature, such as in the range of 0 - 40 °C. Since the regeneration of step (d) can occur simultaneously, it is preferred that step (a) does not have a specific duration, but instead operates continuously.

During step (a), water molecules are removed from the incoming air, which is thus depleted in water. Thus, step (a) affords at the retentate side of the membrane air that is depleted in water. This is also referred to as the retentate stream. Depending on the exact operating conditions and membrane used, step (a) is typically capable to remove at least 95 % of the water, and even as much as 96 - 99.9 % of the water. As such, the relative humidity of the retentate stream is typically as low as 0.01 - 3 %, preferably in the range of 0.1 - 2 %. Even if not all water molecules are removed during step (a), the amount of water present during the adsorption of step (b) is greatly reduced compared to conventional direct air capture processes.

The air depleted in water is subjected to step (b), typically without any substantial alteration in composition of the retentate stream obtained in step (a). The retentate stream of air depleted in water that is obtained in step (a) typically comprises a similar content of carbon dioxide, but a reduced content of water. In one embodiment, the air depleted in water is subjected to step (b) comprises 0.02 - 0.1 vol% carbon dioxide and at most 0.2 vol% water. It is further preferred that the molar ratio of carbon dioxide /water in the air depleted in water that is subjected to step (b) is at least 1/4, such as in the range of 1/3 - 100/1, more preferably in the range of 1/2 - 10/1, most preferably about 1/1. If needed, the skilled person is capable of fine-tuning the conditions of step (a) to achieve such a composition of the retentate stream, for example by changing the transmembrane pressure difference, the temperature or the flow rate of the incoming air.

Step (a) further affords a membrane that is loaded with water molecules. This loaded membrane is regenerated in step (d). In a preferred embodiment, the regeneration of step (d) occurs simultaneously with the selective water removal of step (a), such that the membrane can operate continuously. Thus, steps (a) and (d) of the process according to the invention normally operate continuously.

### Step (b) - Direct air capture

In step (b), the retentate stream of step (a) is contacted with a sorbent for direct air capture, to obtain a stream of air depleted in water and carbon dioxide and a sorbent loaded with carbon dioxide. Direct air capture is well-known in the art, and the present invention employs any known type of direct air capture. The incoming stream for the direct air capture step is depleted in air by virtue of step (a). As such, the incoming air is much dryer than for regular direct air capture. Nonetheless, the loaded sorbent obtained in step (b) may still contain some water. As the water content of the incoming air for step (a) is usually much higher than the carbon dioxide content, the presence - and thus co-adsorption - of water in the retentate stream of step (a) cannot be avoided completely. Hence, some co-adsorption of water during step (b) is also contemplated within the context of the present invention.

The sorbent is capable of absorbing carbon dioxide, and may also be referred to as a carbon dioxide sorbent. Any sorbent known in the art to be suitable for direct air capture of carbon dioxide can be used in the present invention. In direct air capture applications, the sorbent is typically a solid carbon dioxide sorbent. As the sorbent is being contacted with significantly fewer water molecules, relative to carbon dioxide molecules, compared to conventional direct air capture, the selectivity of the sorbent for carbon dioxide over water is not crucial. Sorbents with a relatively low selectivity are also suitable for the present invention. As such, relatively cheap sorbents can be used without the risk of extensive water co-adsorption during the direct air capture step. The sorbent is preferably selected from the group consisting of amine based sorbents, carbonate based sorbents, zeolites and metal organic frameworks, more preferably from amine based sorbents and carbonate based sorbents, most preferably a carbonate based sorbent is used. In an especially preferred embodiment, the sorbent is based on potassium carbonate. Especially good results are obtained with a potassium carbonate sorbent and the retentate stream of step (a) containing carbon dioxide and water in a the molar ratio in the range of 1/2 - 2/1, preferably about 1/1.

The skilled person is capable of operating a direct air capture step, and to set the appropriate conditions. Typical operating conditions include operating at ambient pressure or slightly below, such as between 0.5 and 1.5 bar(a), preferably in the range 0.8 - 1.1 bar(a). No changes in temperature are needed to operate step (b), which therefore preferably operates at ambient temperature, such as between 0-40 °C. The duration of step (b) is preferably until the sorbent is saturated with carbon dioxide. Yet, it is preferred the process operates with multiple sorbent beds (i.e. at least two) such that when one sorbent bed is saturated, a regenerated sorbent is available to continue the operation of step (b). The saturated (or loaded) sorbent can then simultaneously be regenerated in step (c). Thus, in one embodiment step (b) operates continuously and employs multiple sorbent beds. Herein, each bed can be contained in a separate sorbent module (e.g. column), or multiple beds can be present within a single sorbent module. Such sorbent configurations are known in the art and can be applied in the present invention as deemed fit.

During step (b), carbon dioxide molecules are removed from the incoming air. Therefore, step (b) affords a stream of air, which is depleted in water and carbon dioxide. This stream is also referred to as "clean air", as carbon dioxide is removed from the air. The obtained clean air can readily be emitted into the atmosphere without any further treatment. In one embodiment, a part of the clean air stream is used as sweep gas to regenerate the membrane during step (d). As such, a part of the clean air stream is split off as sweep gas. Further details are provided in the description of step (d). Step (b) further affords a sorbent loaded with carbon dioxide, which is regenerated in step (c).

### Step (c) - Sorbent regeneration

In step (c), the loaded sorbent that is obtained in step (b) is regenerated. Step (c) affords a regenerated sorbent which can again be used in step (b) and a stream comprising carbon dioxide molecules that are released from the sorbent during regeneration. In view of the reduced water content of the incoming stream of step (b), the loaded sorbent that is subjected to step (c) comprises less water molecules. Therefore, the sorbent regeneration of step (c) requires the removal of less water molecules and thus costs less energy. Less energy is to be spent on the high heat of desorption of water, which is one of the biggest energy costs of conventional processes for direct air capture.

Regeneration of sorbents for direct air capture is well-known in the art, and the skilled person is able to determine the optimal conditions for such regeneration. Optimal conditions vary from sorbent to sorbent, and can routinely be optimized by the skilled person. Typical operating conditions include operating at elevated temperature and/or reduced pressure, compared to the sorption of step (b). Preferably, step (c) is performed at ambient pressure, such as between 0.5 and 1.5 bar(a), preferably at about 0.8 - 1.1 bar(a), and at elevated temperature. Suitable temperatures are in the range of 30 - 150 °C, preferably in the range of 70 - 120 °C.

As explained for step (b), the sorption of step (b) and regeneration of step (c) preferably occurs simultaneously, employing at least two sorbent beds. As such, when one sorbent bed is saturated at the end of step (b), a regenerated sorbent is available from step (c) to continue the operation of step (b). The saturated (or loaded) sorbent can then simultaneously be regenerated in step (c). Thus, in one embodiment step (c) operates continuously and employs multiple sorbent beds.

A further advantage of the present invention is that the carbon dioxide stream that is obtained in step (c) comprises less water and is purer in carbon dioxide. As such, more diverse applications of the obtained stream of carbon dioxide are possible, with reduced need of intermediate purification of the carbon dioxide stream. Thus, in a preferred embodiment, the obtained stream of carbon dioxide is used for carbon sequestration or as source of carbon dioxide in the formation of valuable compounds, without any further treatment. In one embodiment, a part of the carbon dioxide stream is used as sweep gas to regenerate the membrane during step (d). As such, a part of the carbon dioxide stream is split off as sweep gas. Further details are provided in the description of step (d). Step (c) further affords a regenerated sorbent, which may be used in a further cycle of step (b).

### Step (d) - Membrane regeneration

In step (d), the loaded membrane of step (a) is regenerated by contacting the membrane with a sweep gas at reduced pressure. Step (d) affords a regenerated membrane which can be used in step (a) and a loaded sweep gas comprising water molecules that are released from the membrane during regeneration.

The passing of the sweep gas at the permeate side of the membrane liberates water molecules from the membrane, which are taken along with the sweep gas. The use of a sweep gas reduces the energy needed to desorb the water molecules from the membrane. Thus, a sweep gas loaded with water molecules is obtained. In order to facilitate the migration of water molecules through the membrane, the permeate side of the membrane is at lower pressure than the retentate side. In other words, reduced pressure refers to the pressure at the permeate side of the membrane being lower than at the retentate side. Typically, the pressure at the retentate side is at or near ambient pressure, while the pressure at the permeate side is below ambient pressure. Preferably, the reduced pressure at the permeate side is in the range of 0.1 mbar(a) - 0.98 bar(a), more preferably in the range of 0.5 mbar(a) - 0.2 bar(a), most preferably in the range of 1.0 mbar(a) - 0.1 bar(a). The pressure difference across the membrane is typically in the range 0.01 - 1.5 bar(a), preferably in the range of 0.1 - 1.1 bar(a), more preferably in the range of 0.5 - 1.0 bar(a). Notably, these reduced pressures at the permeate side are not the deep vacuum that is usually required for optimal operation of a selective water membrane. The inventors found that the use of a sweep gas that is obtained from the process itself reduces the pressure difference needed for optimal operation, and therefore reduces the costs of the overall process.

Typically, the pressure can be somewhat higher in case a larger volume of sweep gas is used. In that sense, it is preferred to use the stream of air depleted in water and carbon dioxide obtained in step (b) in the sweep gas, as that has a significantly larger volume than the purified carbon dioxide stream obtained in step (c). As such, the total volume of the sweep gas can be larger, and a pressure that is reduced to a lesser extent can be used at the permeate side of the membrane in step (d). Thus in one embodiment, step (d) employs a sweep gas containing the stream of air depleted in water and carbon dioxide obtained in step (b) and operates at a pressure at the permeate side of the membrane in the range of 0.01 - 0. 98 bar(a), more preferably in the range of 0.5 mbar(a) -0.2 bar(a), most preferably in the range of 0.02-0.1 bar(a), or step (d) employs a sweep gas containing the purified carbon dioxide stream obtained in step (c) and operates at a pressure at the permeate side of the membrane in the range of 0.1 mbar(a) -0.05 bar(a), preferably in the range of 0.5 mbar(a) -0.01 bar(a).

The regeneration of step (d) typically occurs simultaneously with the selective water removal of step (a). In other words, the retentate side of the membrane is contacted with the incoming air, while the permeate side of the membrane is contacted with the sweep gas. At the retentate side, water molecules are constantly taken up by the membrane, then migrate through the membrane by virtue of the pressure difference and are released from the membrane at the permeate side where they are taken up by the sweep gas. Hence, in a preferred embodiment, steps (a) and (d) of the process according to the invention normally operate continuously.

No changes in temperature are needed to operate step (d), which therefore preferably operates at ambient temperature, such as between 0 - 40 °C. Since the regeneration of step (d) can occur simultaneously with the operation of step (a), it is preferred that step (d) does not have a specific duration, but instead operates continuously.

A crucial aspect of the present invention is that the sweep gas that is used in step (d) comprises the stream of air depleted in water and carbon dioxide obtained in step (b), the purified carbon dioxide stream obtained in step (c), or both. Although possible in the context of the present invention, it is preferred that the sweep gas does not contain any further gas. In other words, the sweep gas that is used in step (d) consists of the stream of air depleted in water and carbon dioxide obtained in step (b), the purified carbon dioxide stream obtained in step (c), or both. Likewise, although possible in the context of the present invention, it is less preferred that the sweep gas comprises a mixture of the air depleted in water and carbon dioxide and the purified carbon dioxide stream. Most preferably, the sweep gas that is used in step (d) comprises, or consists of, the stream of air depleted in water and carbon dioxide obtained in step (b).

The sweep gas comprises at least part of the indicated streams, i.e. either part or all of the volume of these streams is used in the sweep gas. Generally, in case only the purified carbon dioxide stream obtained in step (c) is used in step (d), and not the stream of air depleted in water and carbon dioxide obtained in step (b), best results are obtained if all of the purified carbon dioxide stream is used in the sweep gas. The volume of the purified carbon dioxide stream is small enough to be suitable as sweep gas without the need for establishing deep vacuum at the permeate side of the membrane. On the other hand, in case only the stream of air depleted in water and carbon dioxide obtained in step (b) is used in step (d), and not the purified carbon dioxide stream obtained in step (c), best results are obtained if part of the purified carbon dioxide stream is used in the sweep gas.

Thus, in one embodiment, part of the stream of air depleted in water and carbon dioxide obtained in step (b) is used as sweep gas in step (d). This stream of air can mostly be emitted in the atmosphere, but part of it can be used to regenerate the membrane in step (d). In the context of the present embodiment, the obtained loaded sweep has is basically air, which may be somewhat depleted in water, but still is depleted in carbon dioxide. This loaded sweep gas can be emitted into the atmosphere without the need for further purification. Notably, the volume of the stream of air depleted in water and carbon dioxide that is obtained in step (b) is much larger than the volume of sweep gas needed in step (d). Therefore, only part of the stream of air depleted in water and carbon dioxide is used in step (d), wherein the part is typically at most 25 vol.%, preferably 0.0001 - 10 vol.% of the stream of air depleted in water and carbon dioxide, more preferably 0.001 - 10 vol.%, most preferably 0.005 - 1 vol.%. Excellent results have been obtained with 0.05 vol.% of the stream of air depleted in water and carbon dioxide. Using such a small part of the air depleted in water and carbon dioxide obtained in step (b) as sweep gas provides sufficient driving force for the membrane to operate, i.e. for the great majority of water molecules to cross the membrane in step (a), without requiring energy-costly deep vacuum. As such, an optimal energy efficiency for the overall process could be obtained. Thus, in an especially preferred embodiment, the reduced pressure at the permeate side of the membrane is in the range of 1.0 mbar(a)- 0.1 bar(a), and the sweep gas comprises 0.0001 - 10 vol.% of the stream of air depleted in water and carbon dioxide obtained in step (b).

In an alternative embodiment, the purified carbon dioxide stream obtained in step (c) is used as sweep gas in step (d). This purified carbon dioxide stream is mostly used for storage or for the formation of useful products, but it may also be used to regenerate the membrane in step (d). The stream which is obtained in step (c) consists essentially of carbon dioxide, and the loaded sweep gas thus contains carbon dioxide and water. The loaded sweep gas may optionally be dried and further used as deemed fit. Notably, the volume of the purified carbon dioxide stream is of similar size than the volume of sweep gas needed in step (d). Therefore, typically the entire purified carbon dioxide stream is used in step (d). However, in some situations only part of the purified carbon dioxide stream may be sufficient for regeneration of the membrane, which is also encompassed by the present invention. Preferably, 10 - 100 vol.%, more preferably 25 - 100 vol.%, most preferably 50 - 100 vol.% of the purified carbon dioxide stream is used in step (d).

Although the invention could operate efficiently when a combination of the stream of air depleted in water and carbon dioxide obtained in step (b) and the purified carbon dioxide stream obtained in step (c) is used as sweep gas, it is more efficient to use a single source. Most preferably, the sweep gas is consists of the air depleted in water and carbon dioxide that is obtained in step (b), which offers the biggest energy gain for the overall process and offers end-products which are easily further processed. For example, the remainder of the air depleted in water and carbon dioxide that is obtained in step (b) as well as the loaded sweep gas can readily be emitted into the atmosphere. The stream of purified carbon dioxide can be used for carbon sequestration or as source of carbon dioxide in the formation of valuable compounds.

In order to obtain an overall energy efficient process, it is important that the total volume of the sweep gas is sufficiently low, which enables to maintain the pressure difference over the selective water membrane. If too much sweep gas is used, more energy is needed to remove this gas from the permeate side of the membrane. Hence, it is preferred that at most 25 % of the stream of air depleted in water and carbon dioxide obtained in step (b). Preferably, the part that is used in the sweep gas in step (d) is 0.001 - 10 vol% of the total stream obtained in step (b).

### The system

In a second aspect, the invention concerns a system for the direct air capture of carbon dioxide. The system according to the invention is intended for operating the process according to the invention. The system according to the invention comprises the following elements:
(a) an air inlet in fluid connectivity with membrane section (b);
(b) a membrane section comprising a membrane (b1) that is selectively permeable for water, having a retentate side (b2) for receiving air from the inlet (a) and comprising an outlet (b3) for discharging air depleted in water, which is in fluid connectivity with sorbent section (c), and a permeate side (b4) comprising an inlet (b5) for receiving a sweep gas via a fluid connection (d1) or (d2) and an outlet (b6) for discharging a loaded sweep gas;
(c) a sorbent section comprising a carbon dioxide sorbent (c1) that is configured to receive air depleted in water from the retentate side of the membrane (b), an outlet (c2) for discharging air depleted in water and carbon dioxide, means (c3) for regenerating the sorbent and an outlet (c4) for discharging a purified carbon dioxide stream from the sorbent;
(d) means for regenerating the membrane, comprising a fluid connection (d1) between outlet (c2) and inlet (b5) and/or a fluid connection (d2) between outlet (c4) and inlet (b5).

The system according to the invention is capable of capturing carbon dioxide directly from air, which happens when the process according to the invention is executed.

The system comprises an inlet (a) for receiving air. The inlet (a) is in fluid connectivity with a membrane section (b), such that the incoming air can be brought in contact with the membrane such that the air is dried. The membrane section (b) is in fluid connectivity with the sorbent section (c), such that the dried air can be brought in contact with the sorbent such that carbon dioxide is removed. The dried air from which carbon dioxide is removed can then be discharged from the system via outlet (c3). Thus, a flow of air can be established through the system, from inlet (a) to outlet (c3). In a preferred embodiment, the system comprises means to facilitate such a flow of air, such as a fan, suction device or pump. Such means are known in the art and can be routinely implemented by the skilled person. In one embodiment, the system comprises a vacuum pump as part of the membrane section (b), capable of reducing the pressure at the permeate side (b4) of the membrane (b1). Alternatively or additionally, the system according to the invention comprises means for enabling a flow of air through the system, such as a pump or fan capable of creating a slight overpressure at the inlet, which is suitable as driving force for the air through the system. Preferably, the system comprises a vacuum pump capable of reducing the pressure at the permeate side (b4) of the membrane (b1) and pump or fan capable of creating overpressure at the inlet (a).

### Membrane section for selective water removal

The membrane section (b) comprises a membrane (b1) that is selectively permeable for water. The membrane has a retentate side (b2), which is configured to receiving the incoming air from the inlet (a) and comprising an outlet (b3) for discharging air depleted in water, which is in fluid connectivity with sorbent section (c), and a permeate side (b4) comprising an inlet (b5) for receiving a sweep gas via fluid connection (d1) or (d2). Water selective membranes are known in the art and are further defined above. Also, membrane sections or modules are known in the art, and any configuration thereof is suitable in the context of the present invention. The membrane section typically takes the form of two adjacent chambers separated by a membrane. Suitable configurations include sheet membranes, spiral-wound membranes and hollow fibre membranes. The membrane (b1) is configured air-tight, such that gaseous molecules cannot migrate from the retentate side (b2) to the permeate side (b4) except for through the membrane.

The membrane section comprises means to establish a flow of water molecules through the membrane. Such means typically take the form of a vacuum pump to establish a reduced pressure at the permeate side of the membrane. The pressure difference over the membrane forces water molecules through the membrane to the permeate side, while al other molecules of the incoming air remain at the retentate side of the membrane. The air that has travelled through the membrane section at the retentate side is transported to the sorption section (c) through fluid connectivity (b3). As such, (b3) can be seen as the outlet of the membrane section (b) and forms the connectivity to the sorption section (c).

The permeate side of the membrane comprises an inlet (b5), through which a sweep gas is can be contacted with the permeate side of the membrane. Further, an outlet (b6) is configured to discharge the loaded sweep gas that has passed along the membrane, where it has taken up water molecules that migrated through the membrane. Inlet (b5) is in fluid connection with outlet (c2) and/or outlet (c4), and is configured to receive a sweep gas at the permeate side of the membrane. In one embodiment, the system comprises a fluid connection (d1) between outlet (c2) and inlet (b5), wherein the fluid connection comprises a gas separator to separate a part of the air depleted in water and carbon dioxide from the main stream that is discharged from outlet (c2). In this embodiment, the sweep gas comprises, preferably consists of, the air depleted in water and carbon dioxide, i.e. the clean air. In an alternative embodiment, the system comprises a fluid connection (d2) between outlet (c4) and inlet (b5), wherein the fluid connection may comprise a gas separator to separate a part of the purified carbon dioxide stream from the main stream that is discharged from outlet (c4). However, the volume of the purified carbon dioxide stream is typically low enough that all of it is used as sweep gas, in which case a gas separator is not needed. In this embodiment, the sweep gas comprises, preferably consists of, the purified carbon dioxide stream. Although less preferred from the point of view of the configuration of the system, the benefits of the invention can also be obtained if the sweep gas would comprise, preferably consist of, a mixture of the air depleted in water and carbon dioxide and the purified carbon dioxide stream. Thus, in one embodiment, the system comprises a fluid connection (d1) between outlet (c2) and inlet (b5), and (d2) between outlet (c4) and inlet (b5), wherein at least fluid connection (d1) comprises a gas separator to separate a part of the air depleted in water and carbon dioxide from the main stream that is discharged from outlet (c2). The gas separator ensures that part of the stream is used as sweep gas, since the volume needed for the sweep gas is smaller than the volume of the air depleted in water and carbon dioxide. Gas separators are known in the art, and typically take the form of a junction in the piping equipped with a valve. Such a valve can be used to control the volume of the gas that is directed towards inlet (b5) and is used as sweep gas.

As the sweep gas is contacted with the membrane (b1) under reduced pressure, the system according to the invention preferably further comprises a pump that is capable to reduce the pressure at the permeate side (b4) of the membrane (b1). Such a pump is typically capable of establishing a reduced pressure at the permeate side (b4) of the membrane (b1). Suitable pressures are preferably in the range of 0.005 - 0.1 bar(a), more preferably in the range of 0.01 - 0.05 bar(a).

### Sorbent section for carbon dioxide sorption

The a sorbent section (c) comprises a carbon dioxide sorbent (c1), which is configured to receive the air depleted in water from the retentate side of the membrane section (b). The sorbent section (c) further comprises an outlet (c2) for discharging air depleted in water and carbon dioxide, means (c3) for regenerating the sorbent and an outlet (c4) for discharging a purified carbon dioxide stream from the sorbent.

The sorbent section (c) comprises a sorbent (c1) capable of sorbing carbon dioxide. Sorbent sections or modules are known in the art and may be in any known configuration. A sorbent module may also be referred to as a contactor, where streams of a different phase (e.g. gas and solid) are brought into contact. Typically, they take the form of a sorption column. The sorbent can be in particulate form, such as in a sorbent bed, typically a packed bed or a fluidized bed, or the sorbent may be coated on the surface of a porous support material. In a preferred embodiment, the sorbent is provided as a sorbent bed, preferably in a packed bed. Carbon dioxide sorbents are known in the art and further defined above.

Means (c3) for regenerating the sorbent are known in the art, and any suitable means may be used in the system according to the invention. Sorbent modules typically operate in a sorption phase, when the sorbent is contacted with the air depleted in water and carbon dioxide molecules are removed from the air and sorbed on the sorbent, and a regeneration phase, when the sorbent loaded with carbon dioxide molecules is subjected to regeneration. Optimal regeneration conditions may differ from sorbent to sorbent, and are known to the skilled person. Such regeneration means typically include reducing the pressure and/or increasing the temperature of the sorbent, upon which the sorbed carbon dioxide molecules will desorb. In a preferred embodiment, the means (c3) include means for heating the sorbent to a regeneration temperature. Such regeneration temperature is typically in the range of 30 - 150 °C, preferably in the range of 70 - 120 °C. Additionally or alternative, the means (c3) include means for reducing the pressure within the sorbent bed to a regeneration pressure. Such regeneration pressure is typically in the range of 0.001 -1.0 bar(a), preferably in the range of 0.01 - 0.5 bar(a).

In a preferred embodiment, the system according to the invention comprises at least two sorbent beds, such that one sorbent bed can be operative in the process according to the invention, while the second sorbent bed is being regenerated. When the operative sorbent bed is saturated, the two beds may switch function, such that the freshly regenerated sorbent bed becomes operative, while the saturated sorbent bed is being regenerated. As the skilled person will appreciate, regeneration of the sorbent may require several steps and/or different duration then the duration of one bed being operative in the process, such that the optimal number of sorbent beds may be higher than two. The optimal number of beds may depend on the type of sorbent and the regeneration conditions. Optimization of sorbent regeneration in a continuous process is known in the art. The two or more sorbent beds may be comprised in a single module or in separate modules. Means to switch between operation of the sorbent and regeneration are known in the art, and may include rotation of sorbent beds and the use of valves to direct the air depleted in water from the retentate side of the membrane section (b) to the operative bed, while regeneration means (e.g. a sweep gas) are subjected to the regenerating bed.

During the operation of the sorbent, carbon dioxide molecules are removed from the air depleted in water, that originates from the retentate side of the membrane section (b). Typically, the air travels through the sorbent and gets depleted in carbon dioxide. Air depleted in water and carbon dioxide emerges from the sorbent, and is discharged from the sorbent section via outlet (c2). This air is suitable for direct emission into the atmosphere, thereby lowering the carbon dioxide levels in the air and reducing the greenhouse effect. Typically, at least part this air is emitted into the atmosphere. In a first preferred embodiment, the entire volume of air depleted in water and carbon dioxide is emitted into the atmosphere. Alternatively, part of the air depleted in water and carbon dioxide is used as sweep gas for regenerating the membrane (b1) and the remainder is emitted into the atmosphere, in which case the system comprises a fluid connection (d1) between outlet (c2) and inlet (b5).

During the operation of the sorbent, carbon dioxide molecules are desorbed from the sorbent, which leads to the formation of a carbon dioxide stream. This stream is discharged from the sorbent section via outlet (c4). This carbon dioxide is suitable for carbon sequestration or as source of carbon dioxide in the formation of valuable compounds. Alternatively, the carbon dioxide stream is used as sweep gas to regenerate the membrane (b1), in which case the system comprises a fluid connection (d2) between outlet (c4) and inlet (b5).

### Means for regenerating the membrane

The system according to the invention comprises means (d) for regenerating the membrane (b1). Such means enable the contacting of a sweep gas with the permeate side of the membrane (b1), via inlet (b5) in the membrane section (b). The sweep gas is directed to the inlet (b5) via a fluid connection from outlet (c2) and/or (c4), which may contain a gas separator, preferably equipped with a valve to control the volume of the gas that is directed towards inlet (b5) and is used as sweep gas. Typically, means (d) further include a pump to reduce the pressure at the permeate side of the membrane (b1), and is capable of and generating a pressure at the permeate side in the range of 0.001 - 0.05 bar(a), preferably in the range of 0.005 - 0.01 bar(a).

In one embodiment, means (d) comprises a fluid connection (d1) between outlet (c2) and inlet (b5), in which case the air depleted in water and carbon dioxide is used in the sweep gas. In the context of this embodiment, the fluid connection (d1) comprises a gas separator to direct part of the air depleted in water and carbon dioxide towards inlet (b5) and to discharge the remainder from the system. Gas separators are known in the art, and typically take the form of a junction in the piping and is preferably equipped with a valve (e). Such a valve can be used to control the volume of the gas that is directed towards inlet (b5) and is used as sweep gas.

In an alternative embodiment, means (d) comprises a fluid connection (d2) between outlet (c4) and inlet (b5). In the context of this embodiment, the fluid connection (d2) does not need to comprise a gas separator to direct part of the purified carbon dioxide stream towards inlet (b5) and to discharge the remainder from the system. Yet, in some situations only a part of the purified carbon dioxide stream may be sufficient, and therefore fluid connection (d2) a comprise a gas separator. Gas separators are known in the art, and typically take the form of a junction in the piping and is preferably equipped with a valve (e). Such a valve can be used to control the volume of the gas that is directed towards inlet (b5) and is used as sweep gas.

Contacting the permeate side of the membrane (b1) with a sweep gas at reduced pressure enables the desorption of water molecules from the membrane. The thus formed loaded sweep gas can be discharged from the system via outlet (b6). In case means (d) comprise fluid connection (d1), the loaded sweep gas is essentially air which is depleted in carbon dioxide, which is suitable for direct emission into the atmosphere, thereby lowering the carbon dioxide levels in the air and reducing the greenhouse effect. In case means (d) comprise fluid connection (d2), the loaded sweep gas is essentially a mixture of carbon dioxide and water. The loaded sweep gas may be used as deemed fit, such as subjected to water / carbon dioxide separation.

### Figure

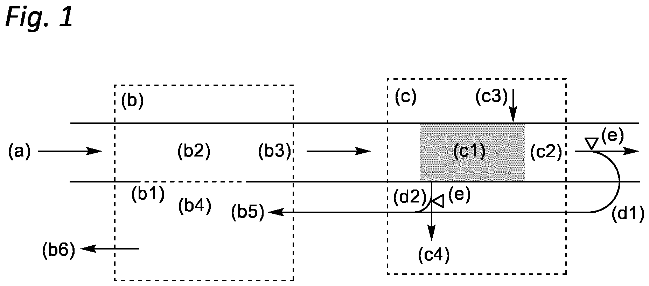

Figure 1 schematically depicts a preferred embodiment of the system according to the invention, comprising a membrane section (b) and a sorbent section (c). The system comprises an inlet (a) for receiving air, in fluid connectivity with membrane section (b). The membrane section (b) comprises a membrane (b1) that is selectively permeable for water, having a retentate side (b2) and a permeate side (b4). An outlet (b3) at the retentate side is for discharging air depleted in water, that has passed along the membrane at the retentate side. The permeate side comprises an inlet (b5) for receiving a sweep gas and an outlet (b6) for discharging the loaded sweep gas that has passed along the membrane at the permeate side. The sorbent section (c) comprises a carbon dioxide sorbent (c1). Outlet (b3) is in fluid connection with the sorbent (c1), which receives the air depleted in water from the membrane section (b). The sorbent section (c) comprises an outlet (c2) for discharging air depleted in water and carbon dioxide and an outlet (c4) for discharging a purified carbon dioxide stream from the sorbent. The sorbent section further comprises means (c3) for regenerating the sorbent. The system according to the invention further comprises means for regenerating the membrane (b1), which take the form of fluid connection (d1) and/or (d2), wherein fluid connection (d1) connects outlet (c2) with inlet (b5), and fluid connection (d2) connects outlet (c4) with inlet (b5). The system may have one or both of these fluid connection, preferably it has at least fluid connection (d1). The fluid connection may be equipped with a valve (e) for controlling the volume of the gas that is directed towards inlet (b5) and is used as sweep gas.

### Example

The energy expenditure of the direct air capture process for the following three situations was compared.

### Case (1):

➢ Wet air is subjected to DAC to obtain clean air.
➢ Regeneration of the DAC sorbent provides a wet CO₂ stream that is subjected to condensation.

### Case (2):

➢ Wet air is subjected to a water selective membrane to obtain dry air.
➢ The dry air is subjected to DAC to obtain clean air.
➢ Regeneration of the DAC sorbent provides a dry CO₂ stream.
➢ The dry CO₂ stream is used to regenerate the water selective membrane to obtain a wet CO₂ stream that is subjected to condensation.

### Case (3):

➢ Wet air is subjected to a water selective membrane to obtain dry air
➢ The dry air is subjected to DAC to obtain clean air.
➢ The clean air is used to regenerate the water selective membrane to obtain a wet clean air (case (3a): 100 vol% of the clean air is used; case (3b): 0.05 vol% of the clean air is used).
➢ Regeneration of the DAC sorbent provides a dry CO₂ stream.

In all cases, wet air (60% RH) at 1.01 bar(a) and 20 °C was fed into to system with a flow rate of 1 m³/h (ncmh). The incoming air contained 77.56 mol% N₂, 21.00 mol% O₂, 1.40 mol% H₂O and 0.04 mol% CO₂. A potassium carbonate sorbent was used in the DAC unit, with a capture unit of 1.9 × 10⁻² m² and operating with a carbon capture ratio of 80 % at 20 °C. Regeneration of the sorbent (carbon dioxide desorption) occurred at 100 °C. For cases (2) and (3), water selective membrane Nafion 117, with a water removal efficiency of 97 % and a thickness of 1 µm, was investigated. The driving force for operating the membrane was optimized by varying the volume of the sweep gas and the pressure at the permeate side. The driving force is determined according to Shamu et al. in Separation and Purification Technology 209 (2019), 229-237, see section 2.1.4) and expressed as the logarithmic mean difference of the component's partial pressure at the retentate and permeate side. The optimal membrane area was determined based on the optimized driving force, the incoming flow rate of 1 m³/h, the permeability coefficient (*P*ᵢ) which amounts to 4.1 × 10⁵ Barrer for the investigated membrane, in order to remove sufficient H₂O from the incoming air to have a H₂O / CO₂ molar ratio of 1 in the dried air that is subjected to DAC. The driving force, and pressure difference across the membrane, over the entire membrane area was used to determine the energy consumption of the water step. Driving forces, membrane areas and energy consumptions for all cases are depicted in Table 1 below.

For comparison, the energy expenditure was also determined for a SPEEK membrane, having a permeability coefficient (*P*ᵢ) of 6.1 × 10⁴ Barrer. Even though the permeance of the SPEEK membrane is significantly lower than for the Nafion membrane, which affects membrane area and pressure difference over the membrane, the effect on the overall energy consumption was low. For example, for case (3b) the overall energy consumption increased from 4.9 × 10⁻³ kW for Nation (see Table 1 below) to 5.0 × 10⁻³ kW for SPEEK.

For case (1), during DAC the CO₂ content of the incoming air is reduced from 0.04 mol% to 0.01 mol%, while the H₂O content is reduced from 1.40 mol% to 0.28 mol%. Clean air with 12% RH was emitted into the atmosphere. The desorbed CO₂ stream contained 97.22 mol% H₂O and 2.78 mol% CO₂ (wet CO₂ at 97% RH). The energy used for desorbing H₂O molecules was 23.32 kJ per hour (6.5 × 10⁻³ kW). This wet CO₂ stream was subjected to condensation to remove water from the CO₂ stream.

For case (2), during selective water removal the H₂O content is reduced from 1.40 mol% to 0.04 mol%, while the CO₂ content remained constant at 0.04 mol%. This dried air with 2% RH was subjected to DAC, during which the H₂O content and the CO₂ content of the dried air is reduced from 0.04 mol% to 0.01 mol%. This clean air with 0% RH was emitted into the atmosphere. The energy used for desorbing H₂O molecules was 0.67 kJ per hour (1.9 × 10⁻⁴ kW). The desorbed CO₂ stream contained 50.0 mol% H₂O and 50.0 mol% CO₂. This CO₂ stream was used to regenerate the water selective membrane at the permeate side, to obtain a loaded sweep gas comprising 97.75 mol% H₂O and 2.25 mol% CO₂. The loaded sweep gas is subjected to condensation to remove water from the CO₂ stream.

For case (3a), during selective water removal the H₂O content is reduced from 1.40 mol% to 0.04 mol%, while the CO₂ content remained constant at 0.04 mol%. This dried air with 2% RH was subjected to DAC, during which the H₂O content and the CO₂ content of the dried air is reduced from 0.04 mol% to 0.01 mol%. 100 vol% of this clean air with 0% RH was used to regenerate the water selective membrane at the permeate side (at 1.01 bar(a) and 20 °C), to obtain a loaded sweep gas comprising 77.62 mol% N₂, 21.00 mol% O₂, 1.37 mol% H₂O and 0.01 mol% CO₂. This clean air with 59% RH was emitted into the atmosphere. The desorbed CO₂ stream contained 50.0 mol% H₂O and 50.0 mol% CO₂. The energy used for desorbing H₂O molecules was 0.67 kJ per hour (1.9 × 10⁻⁴ kW).

For case (3b), during selective water removal the H₂O content is reduced from 1.40 mol% to 0.04 mol%, while the CO₂ content remained constant at 0.04 mol%. This dried air with 2% RH was subjected to DAC, during which the H₂O content and the CO₂ content of the dried air is reduced from 0.04 mol% to 0.01 mol%. 0.05 vol% of this clean air with 0% RH was used to regenerate the water selective membrane at the permeate side (at 0.01 bar(a) and 20 °C), to obtain a loaded sweep gas comprising 77.62 mol% N₂, 21.00 mol% O₂, 1.37 mol% H₂O and 0.01 mol% CO₂. This clean air with 59% RH was emitted into the atmosphere, together with the remaining 99.95 vol% of the clean air of the DAC outlet. The desorbed CO₂ stream contained 50.0 mol% H₂O and 50.0 mol% CO₂. The energy used for desorbing H₂O molecules was 0.67 kJ per hour (1.9 × 10⁻⁴ kW).

**Table 1: The energy expenditure for the cases has been determined as follows:**

| | Case (1) | Case (2) | Case (3a) | Case (3b) |
|---|---|---|---|---|
| Driving force (mbar) | n/a | 3.7 | 0.33 | 1.7 |
| Membrane area (m²) | n/a | 3.5 × 10⁻³ | 2.8 | 7.5 × 10⁻³ |
| Sorbent regeneration (kW) | 6.5 × 10⁻³ | 1.9 × 10⁻⁴ | 1.9 × 10⁻⁴ | 1.9 × 10⁻⁴ |
| Compression (reduced pressure at permeate side) (kW) | 0 | 1.9 × 10⁻² | 0 | 4.6 × 10⁻³ |
| Pressure drop over sorbent (kW) | 5.2 × 10⁻⁵ | 5.2 × 10⁻⁵ | 5.2 × 10⁻⁵ | 5.2 × 10⁻⁵ |
| Pressure at retentate side (kW) | 0 | 9.2 × 10⁻⁶ | 7.4 × 10⁻³ | 2.0 × 10⁻⁵ |
| TOTAL (kW) | 6.5 × 10⁻³ | 1.9 × 10⁻² | 7.6 × 10⁻³ | 4.9 × 10⁻³ |

Herein, the costs for condensing the H₂O from the wet CO₂ product stream are not taken into account, which are applicable to cases (1) and (2). The CO₂ obtained in case (3) is much drier, and for many applications no further drying is needed. Even if further drying would be needed, e.g. for carbon sequestration, the costs of removing a small amount of water will be much lower as for the substantial drying needed in cases (1) and (2).

## Claims

1. Use of a sweep gas comprising a purified carbon dioxide stream and/or a stream of air depleted in water and carbon dioxide for the regeneration of a selective water membrane loaded with water, wherein the regeneration occurs at reduced pressure and the stream comprised in the sweep gas originates from a process for the direct air capture of carbon dioxide, and wherein the membrane is used for the removal of water from air during the same process for the direct air capture of carbon dioxide.

2. The use according to claim 1, wherein the sweep gas comprises the stream of air depleted in water and carbon dioxide, which is obtained by subjecting air to (a) selective water step using the membrane and (b) direct air capture using a carbon dioxide sorbent.

3. The use according to claim 1 or 2, wherein the reduced pressure is in the range of 0.1 mbar(a) -0.98 bar(a), bar(a).

4. Process for the direct air capture of carbon dioxide, comprising:
(a) contacting air with a membrane that is selectively permeable for water, to obtain a retentate stream of air depleted in water and a membrane loaded with water;
(b) subjecting the retentate stream of step (a) to a sorbent for direct air capture, to obtain a stream of air depleted in water and carbon dioxide and a sorbent loaded with carbon dioxide;
(c) regenerating the loaded sorbent of step (b), to obtain purified carbon dioxide stream and a regenerated sorbent;
(d) regenerating the loaded membrane of step (a) by contacting the membrane with a sweep gas at reduced pressure, wherein the sweep gas comprises at least part of the stream of air depleted in water and carbon dioxide obtained in step (b) and/or at least part of the purified carbon dioxide stream obtained in step (c).

5. The process according to claim 4, wherein the step (d) operates at a reduced pressure in the range of 0.1 mbar(a) - 0.98 bar(a).

6. The process according to any one of claims 4-5, wherein the sweep gas consists of 0.0001 - 10 vol.% of the stream of air depleted in water and carbon dioxide obtained in step (b) or 25 -100 vol.% of the purified carbon dioxide stream obtained in step (c), preferably the sweep gas consists of 0.0001 - 10 vol.% of the stream of air depleted in water and carbon dioxide obtained in step (b).

7. The process according to any one of claims 4-6, wherein the membrane is selected from sulfonated poly(ether ether ketone) (SPEEK) membranes, sulfonated tetrafluoroethylene based fluoropolymer-copolymer membranes, polyimide (PI) membranes, polydimethylsiloxane (PDMS) membranes, organosilica membranes (such as bis(triethoxysilyl)ethane (BTESE) organosilica membranes or PEG-(3-aminopropyl)triethoxysilane (APTES) (PA) membranes), polybenzimidazole (PBI) membranes, zeolite membranes and carbon-based membranes, preferably the membrane is a sulfonated poly(ether ether ketone) membrane or a sulfonated tetrafluoroethylene based fluoropolymer-copolymer membrane.

8. The process according to any one of claims 4-7, wherein the membrane has a permeability for water in the range of 2 × 10⁴ - 2 × 10⁶ Barrer and for carbon dioxide of at most 1 × 10² Barrer, preferably wherein the ratio of water to carbon dioxide selectivity is at least 1 × 10⁴.

9. The process according to any one of claims 4 - 8, wherein the sorbent is a carbon dioxide sorbent, preferably selected from the group consisting of amine based sorbents, carbonate based sorbents, zeolites and metal organic frameworks.

10. The process according to any one of claims 4-9, wherein the air that is subjected to step (a) comprises 0.02 -0.1 vol% carbon dioxide and 0.5 - 5 vol% water.

11. The process according to any one of claims 4 - 10, wherein the retentate stream of air depleted in water that is subjected to step (b) comprises 0.02 - 0.1 vol% carbon dioxide and at most 0.2 vol% water, and/or wherein the molar ratio of carbon dioxide and water in the range of 1/3 - 100/1.

12. The process according to any one of claims 4 - 11, wherein the sorbent is based on potassium carbonate and the molar ratio of carbon dioxide and water in the range of 1/2 - 2/1, preferably about 1/1.

13. The process according to any one of claims 4 - 12, which operates continuously and wherein:
- steps (a) and (d) occur simultaneously operating step (a) at the retentate side and step (d) at the permeate side; and
- wherein at least two sorbent beds operate simultaneously, with at least one operating step (b) and at least one operating step (c).

14. System for the direct air capture of carbon dioxide, comprising:
(a) an air inlet in fluid connectivity with membrane section (b);
(b) a membrane section comprising (b1) a membrane that is selectively permeable for water, having (b2) a retentate side for receiving air from the inlet (a) and comprising an outlet (b3) for discharging air depleted in water, which is in fluid connectivity with sorbent section (c), and (b4) a permeate side comprising an inlet (b5) for receiving a sweep gas via a fluid connection (d1) or (d2);
(c) a sorbent section comprising (c1) a carbon dioxide sorbent for receiving air depleted in water from the retentate side of the membrane (b), comprising (c2) an outlet for discharging air depleted in water and carbon dioxide, means (c3) for regenerating the sorbent and an outlet (c4) for discharging a purified carbon dioxide stream from the sorbent;
(d) means for regenerating the membrane, comprising (d1) a fluid connection between outlet (c2) and inlet (b5) and/or (d2) a fluid connection between outlet (c4) and inlet (b5), wherein outlet (c2) and/or outlet (c4) comprises a valve (e) for directing part of the outlet stream via fluid connection (d1) or (d2) towards inlet (b5).

15. The system according to claim 14, comprising the fluid connection (d1) which is equipped with a valve (e) for controlling the volume of the sweep gas that is directed towards inlet (b5).
